# EUROPEAN PATENT APPLICATION

(11) **EP 2 106 695 A2**
(43) Date of publication of application: **07.10.2009**
(21) Application number: 09004296.1
(22) Date of filing: 25.03.2009
(51) Int. Cl.: A01N 1/02

(54) **Thawed organ or tissue or thawed cell group to be donated, transplanted, added, or administered to living body, production process thereof, supercooled solution therefor, and production apparatus of the organ or tissue**

(30) Priority: 04.04.2008 JP 2008098782
(71) Applicant: Ellie Corporation, Fujieda-shi, Shizuoka-ken 426-0071 (JP)
(72) Inventor: Yagi, Shunichi, Shizuoka 426-0071 (JP)
(74) Representative: Prinz & Partner

(57) **Abstract**

[Problem to be solved]

The present invention aims to freeze and store organs or tissues taken from human bodies or animals and after thawing, use the resulting organs or tissues, or cells taken and extracted therefrom for medical treatment.

[Means for solving the problem]

The present invention is **characterized in that** the organs or tissues taken from human bodies or animals are regenerated through the steps of freezing, storing and thawing; the cells taken from the organs or tissues undergo cell division and colonization.

## Description

### BACKGROUND OF THE INVENTION

### 1. Field of the Invention

The present invention aims to freeze and store organs or tissues taken from human bodies or animals and after thawing, use the resulting organs or tissues, or cells obtained and cultured therefrom for medical treatment. It is thus an invention belonging to the regenerative medicine field or livestock field.

### 2. Description of the Related Art

Storage of frozen single cells such as sperm, egg or bone marrow and medical practice and planned production of livestock using the stored single cells have conventionally been performed. When organs or tissues themselves are frozen, on the other hand, it is impossible to regenerate them. It has long been a dream of human beings to freeze and store organs or tissues and use them for transplantation, or use cell groups available from them after thawing for medical treatment.

### SUMMARY OF THE INVENTION

Recently, medical treatment using stem cells have attracted attentions. The present invention also aims to provide a basic technology for carrying out medical treatment with stem cells obtained from frozen/thawed organs or tissues. From the standpoint of derivation, stem cell groups available by the present invention are different from ES cells in that they are obtained without using fertilized eggs and are different from IPS cells in that they are not artificial cells whose derivation and mechanism are unknown. A common difference from ES cells and IPS cells is that in the invention, organs or tissues are frozen and stored as are so that an absolute amount of cells obtained therefrom increases drastically.

Some tissues which rear babies in practice and are discarded after childbirth are rich in stem cells. For example, stem cells are rich in umbilical cord, amnion, umbilical cord, and the like. The present invention can aim to freeze and store these tissues as are and when necessary, thaw them, extract stem cells from them and regenerate the stem cells for use in medical treatment.

In this case, if not only samples from the mother and her baby but also many samples classified by data about DNA, blood type, medical history, test results of infection, race, age and the like which data are necessary upon freezing and storage can be frozen and stored and a proper one can be selected from the samples thus prepared, it will be possible to introduce transplantation with minimized immunological rejection into general medical treatment. This may lead to medical treatment capable of transplanting frozen/thawed organs or tissues themselves, depending on a further research in future.

There are mainly two reasons why organs or tissues taken from human bodies or animals and then frozen could not so far be utilized after thawing. They are disruption of cell walls due to expansion of ice crystals which occurs upon freezing and further disruption of cell walls due to expansion of ice crystals which occurs upon thawing.

Single cells such as sperm cells and egg cells are conventionally frozen and stored by vitrification of a solution and cells (while using, as an antifreeze solution, ethylene glycol (EG), dimethylsulfoxide (DMSO), or sucrose (Suc) at a predetermined ratio). For freezing, straw vitrification and human IVF chip method can be employed, but they are not suited for freezing of large-sized substances such as organs and tissues. In addition, a cell storage ratio of these methods is as low as about from about 10 to 25%. There is therefore no technology capable of freezing, storing and thawing organs or tissues and regenerating cells thereof. It is therefore impossible to obtain a large amount of useful cells by thawing organs or tissues which have been frozen and stored.

The present inventors have found, as a means for uniformly freezing large-sized substances such as organs or tissues taken from human bodies or animals while suppressing cell disruption, a method of freezing the organs or tissues at a temperature lower than -2°C to -6°C which is a temperature zone permitting expansion of ice crystals. They have paid attention to a low solidification point and low toxicity (LD50 value) of a polyethylene glycol (conforming to Japanese Pharmaceutical Excipients) having a molecular weight of around 200. It has a solidification point of -50°C and an LD50 value of 28 g/kg (oral, rats). It has been understood that when this polyethylene glycol is dissolved in physiological saline at a concentration of 30%, the resulting solution has a solidification point of around -7°C and that the organs or tissues impregnated with the solution have a solidification point of around -6°C. Although its toxicity is low, it should not spend too much time from impregnating the organ or tissue with the resulting solution to freezing. The methods described below are therefore invented and a larger portion of an organ or tissue is impregnated with the solution used as a supercooled solution for a short period of time.

The supercooled solution does not penetrate into the every corner of organs or tissues including their cells so that rapid freezing is required when they are frozen. Use of liquid nitrogen is not suited because too rapid cooling causes a disruption phenomenon of organs or tissues. It is needless to say that slow freezing in a freezer is also not suited. The present inventors have succeeded in regeneration of cells thawed after frozen by any one of the following three methods. The first one is a rapid freezing method of charging a tank with an alcohol or an alcohol solution and immersing an organ or tissue in the tank after cooling the alcohol or solution to from about -30 to -40°C. The second one is an air blast method of rapidly freezing the organ or tissue with air cooled to around -40°C or less. The last one is a freezing method in a freezer which supercools the organ or tissue by using an electromagnetic field. In this method of causing supercooling with an electromagnetic field, when the supercooled solution is not used, animal protein freezes at about -2°C to -3°C so that cells thereof cannot be protected. On the other hand, it has been revealed that when the supercooled solution is used, the freezing temperature can be reduced greatly. If a supercooling apparatus which does not cause freezing of even a human body or animal protein up to -6°C is completed in future, such an apparatus does not require use of a supercooled solution and is therefore preferred. Even in this case, however, conditions necessary for freezing to obtain a thawed organ or tissue in Claim 1 are still the same and they are not influenced by the presence or absence of a supercooled solution.

As a means for protecting cells from disruption upon thawing, the thawing system (Japanese Patent Nos. 3,284,409 and 3,641,715, U.S. Patent Nos. 6,479,805 B1 and 6,559,429 B2, and European Patent No. 1049359) invented by the present inventors are employed. This is a rapid thawing system capable of approximating thawing temperatures inside and outside an organ or tissue and at the same time, finishing thawing by bringing them close to -0°C. According to this system, thawing can be performed while minimizing cell disruption. Use of this thawing system enables to increase the temperature of the entire organ or tissue to about -2°C rapidly. Then, the organ or tissue thawed so as to have an entire temperature of -2°C is immersed in a temperature-controlled bath of from +20°C to 30°C to change the temperature to a positive temperature. As a method of changing the entire temperature of the thawed organ or tissue to a positive temperature, there are several methods such as exposure to infrared laser in addition to immersion in a warm bath, but no limitation is imposed on the method in the invention.

Then, the supercooled solution is removed, followed by immersion of the organ or tissue in a substance serving for physiological activity. The thawed organ or tissue is then cultured by a dissociation culture method. As a result, cell division, cell proliferation, and colonization of the thawed organ or tissue occur. It has been confirmed that upon cultivation, addition of a predetermined amount of aloe vela high molecular powder developed by the present inventors which is a natural substance and contains glycoprotein and macromolecular polysaccharide has cell repair effects and physiologically activating effects.

The following are present inventions as claimed in Claims 1 to 27.
The invention described in Claim 1 is a thawed organ or tissue to be donated, transplanted, added, or administered to living body, which is obtained by freezing an organ or tissue taken from a human body or animal by a freezing means capable of preventing cells of the organ or the tissue from undergoing expansion of ice crystals, storing the frozen organ or tissue by a storing means capable of preventing the cells of the organ or the tissue from undergoing deterioration during storage in a frozen state, thawing the stored organ or tissue by a thawing means capable of preventing the organ or tissue from undergoing expansion of ice crystals because thawing temperatures are almost the same between the center portion and the surface-layer portion of the organ or tissue; and causing the organ or tissue thus thawed to have physiological activity or living-body responsiveness in order to hinder damage or cell disruption of the organ or tissue.

The invention described in Claim 2 is a thawed cell group to be donated, transplanted, added, or administered to living body, which is obtained by subjecting cells taken from the thawed organ or tissue as claimed in Claim 1 to a physiological activity control means.

The invention described in Claim 3 is the thawed organ or tissue to be donated, transplanted, added, or administered to living body according to Claim 1, wherein the organ or tissue taken from a human body or animal is an organ or tissue having abundant physiological activity such as stem cells of umbilical cord, placenta or amnion which will otherwise be discarded after childbirth or skin, oral mucous membrane or parenchymal organ taken from the human body or animal.

The invention described in Claim 4 is the thawed cell group to be donated, transplanted, added, or administered to living body according to Claim 2, wherein the thawed cell group is taken from a thawed organ or tissue rich in stem cells of umbilical cord, placenta or amnion which will otherwise be discarded after childbirth or skin, oral mucous membrane or parenchymal organ taken from the human body or animal and subjected to the physiologically activity control means.

The invention described in Claim 5 is a supercooled solution to be used for a thawed organ or tissue to be donated, transplanted, added, or administered to living body, which impregnates therewith the organ or tissue as claimed in Claim 1 or 3 prior to freezing thereof, controls a freezing point of the organ or tissue to around -6°C or less and at the same time, has slight toxicity to the organ or tissue.

The invention described in Claim 6 is the supercooled solution to be used for a thawed organ or tissue to be donated, transplanted, added, or administered to living body according to Claim 5, which comprises a mixture obtained by mixing, at a predetermined ratio, a polyethylene glycol having a molecular weight of 200±30 g/mol and a physiological saline, a liquid obtained by adding, to the physiological saline, a substance serving for physiological activity in a predetermined amount not causing cell disruption, a Ringer's solution, or a liquid obtained by adding, to the Ringer's solution, a substance serving for physiological activity in a predetermined amount not causing cell disruption.

The invention described in Claim 7 is the supercooled solution to be used for a thawed organ or tissue to be donated, transplanted, added, or administered to living body according to Claim 5 or Claim 6, wherein when the mixture is obtained by mixing a polyethylene glycol having a molecular weight of 200±30 g/mol and a physiological saline, a liquid obtained by adding, to the physiological saline, a substance serving for physiological activity in a predetermined amount not causing cell disruption, a Ringer's solution, or a liquid obtained by adding, to the Ringer's solution, a substance serving for physiological activity in a predetermined amount not causing cell disruption, the concentration of the polyethylene glycol is set at from 15% to 35% and a freezing point of the organ or tissue is around -6°C or less.

The invention described in Claim 8 is the supercooled solution to be used for a thawed organ or tissue to be donated, transplanted, added, or administered to living body according to any one of Claims 5 to 7, which further comprises a substance serving for physiological activity of cells such as antioxidant, glycoprotein preparation, macromolecular polysaccharide preparation, or antibiotic in a predetermined amount not causing cell disruption.

The invention described in Claim 9 is the supercooled solution to be used for a thawed organ or tissue to be donated, transplanted, added, or administered to living body according to any one of Claims 5 to 8, which further comprises, in addition to the substance serving for physiological activity of cells such as antioxidant or antibiotic, an aloe vera high molecular powder which is a natural substance containing a glycoprotein and a macromolecular polysaccharide in a predetermined amount not causing cell disruption even the amount of the other substance serving for physiological activity is added.

The invention described in Claim 10 is a production process of the thawed organ or tissue to be donated, transplanted, added, or administered to living body as described in Claim 1 or Claim 3, which comprises removing the blood and unwanted mixtures from an organ or tissue taken from a human body or animal, impregnating the resulting organ or tissue in an supercooled solution to freeze it while preventing expansion of ice crystals in the cells thereof, storing the frozen organ or tissue for a predetermined time at a temperature not causing cell disruption while preventing deterioration of the organ or tissue, completing thawing so as not to cause expansion of ice crystals in the cells of the organ or tissue also in thawing by rapidly thawing the organ or tissue to a temperature range near -0°C while approximating a thawing temperature at the center of the organ or tissue and a thawing temperature at the surface portion thereof, changing the temperature of the organ or tissue to a positive temperature, removing the supercooled solution from the organ or tissue, impregnating the resulting organ or tissue in a liquid serving for physiological activity to induce physiological activity or physiological responsiveness in the thawed organ or tissue.

The invention described in Claim 11 is the production process of a thawed cell group to be donated, transplanted, added, or administered to living body. It is a production process of the thawed cell group as described in Claim 2 or Claim 4 taken from the thawed organ or tissue as described in Claim 1 or Claim 3, which comprises carrying out a physiological activity control means, that is, repairing and/or rearing the cells for a predetermined time by using a cell repairing agent and/or cell activity aid under an optimum culture environment of a cell culture liquid composition at a temperature, a pH value, a carbon dioxide gas concentration, and a humidity not causing cell disruption after thawing, whereby physiological activity or physiological responsiveness is induced in the cell group.

The invention described in Claim 12 is the production process of a thawed cell group to be donated, transplanted, added, or administered to living body according to Claim 11, wherein the physiological activity or physiological responsiveness is induced in the cell group by carrying out the physiological activity control means, that is, repairing and/or rearing the cells for a predetermined time by adding, as the cell repairing agent and/or cell activity aid, an aloe vera high molecular powder which is a natural substance containing a glycoprotein and a macromolecular polysaccharide in a predetermined amount not causing cell disruption.

The invention described in Claim 13 is the production process of a thawed organ or tissue to be donated, transplanted, added, or administered to living body according to Claim 10, wherein the removal of the blood and unwanted mixtures from the organ or tissue taken from a human body or an animal is performed by pouring, from gaps between blood vessels, cells or cell supports of the organ or tissue, a physiological saline, a solution obtained by arbitrarily adding, to the physiological saline, a substance serving for physiological activity such as blood anticoagulant, antioxidant, or antibiotic in a predetermined amount not causing cell disruption, a Ringer's solution, or a solution obtained by arbitrarily adding, to the Ringer's solution, a substance serving for physiological activity such as blood anticoagulant, antioxidant, or antibiotic in a predetermined amount not causing cell disruption and thereby extruding the blood and the unwanted mixtures to remove them.

The invention described in Claim 14 is the production process of a thawed organ or tissue to be donated, transplanted, added, or administered to living body according to Claim 10, wherein the removal of the blood and unwanted mixtures from an organ or tissue taken from a human body or an animal is performed by filling a sterile bag with, together with the organ or tissue, a predetermined amount of a physiological saline, a solution obtained by adding, to the physiological saline, any combination of substances serving for physiological activity such as anticoagulant, antioxidant, and antibiotic in a predetermined amount not causing cell disruption, a Ringer's solution, or a solution obtained by arbitrarily adding, to the Ringer's solution, any combination of substances serving for physiological activity such as anticoagulant, antioxidant, and antibiotic in a predetermined amount not causing cell disruption; loading the sterile bag in a vacuum sealing apparatus, reducing the pressures inside and outside the sterile bag, sealing the sterile bag under reduced pressure, and substituting the blood and the unwanted mixtures with the physiological solution by making use of a pressure difference between the inside and outside the sterile bag generated by returning the pressure to an atmospheric pressure.

The invention described in Claim 15 is the production process of a thawed organ or tissue to be donated, transplanted, added, or administered to living body according to Claim 10, wherein the impregnation of the organ or tissue taken from a human body or animal in the supercooled solution to be used before freezing is performed by pouring the supercooled solution from gaps between the blood vessels, cells or cell supports of the organ or tissue to impregnate an entire portion of the organ or tissue in the supercooled solution.

The invention described in Claim 16 is the production process of a thawed organ or tissue to be donated, transplanted, added, or administered to living body according to Claim 10, wherein the impregnation of the organ or tissue taken from a human body or animal in the supercooled solution to be used before freezing is performed by filling a sterile bag with the organ or tissue and a predetermined amount of the supercooled solution, loading the bag on a vacuum sealing apparatus, reducing the pressures inside and outside the sterile bag, sealing the sterile bag under reduced pressure, and then returning the pressure to atmospheric pressure to cause a difference in pressure between inside and outside the sterile bag, whereby the supercooled solution is penetrated through the organ or tissue.

The invention described in Claim 17 is the production process of a thawed organ or tissue to be donated, transplanted, added, or administered to living body according to Claim 10, wherein the freezing of the organ or tissue taken from a human body or an animal is performed by impregnating the organ or tissue with the supercooled solution having a predetermined concentration not causing cell disruption, charging the resulting organ or tissue in a sterile bag, deaerating and sealing the sterile bag, immersing the bag in a liquid cooled to -30°C or less to rapidly freeze the organ or tissue.

The invention described in Claim 18 is the production process of a thawed organ or tissue to be donated, transplanted, added, or administered to living body according to Claim 10, wherein the freezing of the organ or tissue taken from a human body or animal is performed by impregnating the organ or tissue in the supercooled solution having a concentration not causing cell disruption, charging the organ or tissue in a sterile bag, deaerating and sealing the sterile bag, and placing the bag in a freezer emitting cold air of -40°C or less to rapidly freeze an entire portion of the organ or tissue.

The invention described in Claim 19 is the production process of a thawed organ or tissue to be donated, transplanted, added, or administered to living body according to Claim 10, wherein the freezing of the organ or tissue taken from a human body or animal is performed by impregnating the organ or tissue in the supercooled solution having a predetermined concentration, and placing the resulting organ or tissue in a supercooling freezer capable of creating, in a tank thereof, an electromagnetic field, thereby freezing an entire portion of the organ or tissue while reducing the concentration of the supercooled solution to from 15 to 25%.

The invention described in Claim 20 is the production process of a thawed organ or tissue to be donated, transplanted, added, or administered to living body according to Claim 10, wherein the thawing of the organ or tissue stored in a frozen state is performed by charging the frozen organ or tissue in a decompression tank, repeating, a plurality of times, a step of exposing the organ or tissue to microwave radiation for a predetermined time with a predetermined output of power while reducing a pressure to a pressure under which microwave heating can be carried out, terminating the microwave heating, reducing the pressure to cause sublimation at the surface layer portion of the frozen organ or tissue, decreasing a temperature difference between the inside and surface layer portion of the organ or tissue by causing sublimation at the surface portion of the organ or tissue, thereby reducing the temperature at the surface layer portion, returning the pressure to enable microwave heating, carrying out microwave heating again, terminating the microwave heating again, reducing the pressure to cause sublimation at the surface layer portion of the frozen organ or tissue, thereby reducing the temperature at the surface portion and approximating temperatures inside and the surface layer portion in a plurality of times, and completing thawing in a temperature zone near -0°C while approximating the temperature inside to that at the surface layer portion.

The invention described in Claim 21 is the production process of a thawed organ or tissue to be donated, transplanted, added, or administered to living body according to Claim 10, wherein the change of a temperature of the thawed organ or tissue to a positive temperature is performed by, after completing the thawing in a temperature zone near -0°C, immersing the organ or tissue in a physiological saline or a Ringer's solution maintained within a temperature range of from 20°C to 30°C to raise its temperature to a positive temperature.

The invention described in Claim 22 is the production process of a thawed organ or tissue to be donated, transplanted, added, or administered to living body according to Claim 10, wherein the removal of the supercooled solution from the thawed organ or tissue is performed by pouring a physiological saline, a solution obtained by adding thereto a substance serving for physiological activity such as antioxidant in a predetermined amount not causing cell disruption, a Ringer's solution, or a solution obtained by adding thereto a substance serving for physiological activity such as antioxidant in a predetermined amount not causing cell disruption through gaps between the blood vessels, cells, or cell supports of the thawed organ or tissue and extruding the supercooled solution to remove the same.

The invention described in Claim 23 is the production process of a thawed organ or tissue to be donated, transplanted, added, or administered to living body according to Claim 10, wherein the removal of the supercooled solution from the thawed organ or tissue is performed by charging, together with the organ or tissue, a physiological saline, a solution obtained by adding thereto a substance serving for physiological activity such as antioxidant in a predetermined amount not causing cell disruption, a Ringer's solution, or a solution obtained by adding thereto a predetermined amount of substance serving for physiological activity such as antioxidant in a predetermined amount not causing cell disruption in a sterile bag, placing the sterile bag in a vacuum sealing apparatus, and substituting the supercooled solution with the physiological solution by making use of a pressure difference between the inside and outside of the sterile bag generated by reducing the pressures inside and outside the sterile bag, sealing the sterile bag under reduced pressure, and returning the pressure to the atmospheric pressure.

The invention described in Claim 24 is the production process of a thawed organ or tissue to be donated, transplanted, added, or administered to living body according to Claim 10, wherein the impregnation of the thawed organ or tissue after removal of the supercooled solution in the liquid serving for physiological activity is performed by pouring the liquid through gaps of the blood vessels, cells, or cell supports of the thawed organ or tissue to impregnate the organ or tissue in the liquid.

The invention described in Claim 25 is the production process of a thawed organ or tissue to be donated, transplanted, added, or administered to living body according to Claim 10, wherein the impregnation of the thawed organ or tissue after removal of the supercooled liquid in the liquid serving for physiological activity is performed by filling a sterile bag with a predetermined amount of the liquid and the thawed organ or tissue, placing the bag in a vacuum sealing apparatus, and impregnating the thawed organ or tissue in the liquid by making use of a pressure difference between the outside and inside of the sterile bag generated by reducing pressures inside and outside the sterile bag, sealing the sterile bag under a reduced pressure, and then returning the pressure to an atmospheric pressure.

The invention described in Claim 26 is the production process of a thawed organ or tissue to be donated, transplanted, added, or administered to living body according to Claim 10 or 11, wherein the judgment of the physiological activity of the thawed organ or tissue or the cell group is performed based on an electrical response from the thawed organ or tissue or the cell group or a partial extract therefrom, a change in light signal detected via a probe from the thawed organ or tissue or the cell group, or cell division, cell proliferation or colonization induced by culture.

The invention described in Claim 27 is a production apparatus of the thawed organ or tissue as described in Claim 1 or Claim 3, which carries therein the organ or tissue taken from a human body or an animal, is deprived of the blood or unwanted mixtures, is impregnated with the supercooled solution, and then is sealed in a deaerated sterile bag; comprises: (1) a liquid freezer, an air blast freezer, or a supercooling freezer using an electromagnetic field, which enable rapid freezing; (2) a freezer which stores the frozen organ or tissue at a temperature not greater than -60°C for a predetermined term; (3) a rapid thawing apparatus capable of approximating thawing temperatures at the center portion and surface layer portion of the frozen organ or tissue and setting a thawing completion temperature close to -0°C, (4) a converter of the temperature of the thawed organ or tissue to a positive temperature, and (5) an apparatus for judging the physiological activity of cells; and induces the physiological activity or biological responsiveness of the thawed organ or tissue.

In the initial stage, since a large amount, in absolute terms, of cells are available, the present invention enables construction of general regenerative medicine which can be provided for not only cell donors but also other patients though it is medicine using cells.

Transplantation of thawed organs or tissues will be realized in future with further research based on the invention. By selecting, for transplantation, a proper organ, tissue or cell to be thawed having DNA, blood type, and the like compatible to those of a transplant patient from a large number of organs or tissues frozen and stored in advance, not only high biocompatibility with the patient can be achieved but also shortage of donors can be alleviated.

In the livestock industry, on the other hand, the invention is significantly effective for sick livestock animals but also useful for production cost reduction or planned production.

The invention enables freezing and storage of organs or tissues taken from human beings or animals. Cells of organs or tissues stored in a frozen state can be regenerated and they can be made use of as follows:

### (i) Establishment of new regenerative medicine using stem cells obtained by extractive cultivation of frozen organs or tissues.

At present, colonization of thawed cells is confirmed. After further research and animal experiments, clinical testing can be conducted. Medical treatment utilizing stem cells has shown a progress so that the invention capable of keeping an absolute amount of stem cells has a possibility of treating many patients suffering from various diseases. In addition, establishment of a stockpiling system of stem cells may save patients, such as leukemia patients, troubled by shortage of donors and is expected to have an effect of alleviating shortage of donors.

### (ii) Stem Cell Bank (using umbilical cord, amnion, placenta, and the like which will otherwise be discarded after childbirth)

After regenerative medicine using stem cells obtained from thawed organs or tissues makes sufficient progress, stem cell banks can be established in hospitals or districts throughout the world based on exported know-how and apparatus. The organs or tissues are each frozen and stored with data of DNA, blood type, childbearing age, medical history, race, and progress of childbirth and in addition, results of cytoscopy. Management of data for achieving biocompatibility with patients is necessary to minimize the refuse reaction of them. If transplantation can be carried out as easily as transfusion, it can be established as general medical treatment having the highest effect.

### (iii) Stem cell storage system for babies and their mothers

If a technology of storing, in a frozen state, organs or tissues which have so far been discarded just after baby birth is established, they can be used as medical materials for their family and contribute to minimization of rejection.

### (iv) Transplant of thawed organs

It is now very difficult to meet an organ having biocompatibility with that of patients in kidney or heart transplant. Patients having a transplanted organ, on the other hand, are suffering from rejection reaction. If further research will be made based on the present invention, there is a possibility of realizing transplant causing less rejection reaction, because a suitable organ can be selected from an abundant variety of organs stored in a frozen state. A definite reproduction technology has been established as a result of a series of developments so that the invention can serve to further progress of medical research.

### BRIEF DESCRIPTION OF DRAWINGS

FIG. 1 includes micrographs showing a change in cultured cells.
FIG. 2 includes micrographs showing cell division.

### DESCRIPTION OF THE PREFERRED EMBODIMENTS

Production steps from (1) to (10) of a thawed organ or tissue, or a cell group taken therefrom will next be described.

### (1) Step of removing the blood and unwanted mixtures from the organ or tissue

After an organ or tissue is taken from a human body or animal, blood and unwanted mixtures are removed promptly from it. It is known that when the blood stays at one site, components thereof such as hemoglobin have a strong adverse effect on the cells at the site so that it is removed promptly and politely as much as possible. Removal is performed by adding, to a physiological saline or Ringer's solution, a predetermined amount of a substance serving for physical activity of cells such as anticoagulant, antioxidant or antibiotic to substitute the blood with the resulting mixture. When a blood vessel can be used, the resulting mixture is injected into the blood vessel to extrude the blood and unwanted mixtures therefrom, while a blood vessel cannot be used, the organ or tissue, together with the resulting mixture, is charged in a sterile bag and the blood or unwanted mixtures are substituted with the mixture by making use of a pressure difference generated inside and outside the bag by using a vacuum sealing apparatus.

### (2) Step of impregnating the organ or tissue in a supercooled solution

The organ or tissue is impregnated in the supercooled solution in accordance with a design of preparation of the supercooled solution and an addition amount thereof so as to control the freezing temperature of the organ or tissue to about -6°C or less, thereby preventing cell disruption which will otherwise occur due to expansion of ice crystals upon freezing. The impregnation is performed in a similar manner to that employed for removal of the blood. It is preferred to add, to the supercooled solution, a predetermined amount of a substance serving for physiological activity of cells. After injection of the supercooled solution, the resulting organ or tissue is allowed to stand in a cool place for a predetermined time to achieve sufficient impregnation.
The supercooled solution is required to have a solidification point of around -50°C or less and have low toxicity.

### (3) Freezing step of the organ or tissue

Regeneration of cells is confirmed when the following three refrigeration systems are employed. They are a liquid freezer capable of reducing a refrigerant temperature to around -30°C or less; an air blast freezer capable of reducing a cold air temperature to about -40°C or less; and a supercooling freezer using an electromagnetic field for causing supercooling of the organ or tissue. There are various freezing systems and the freezing conditions in Claim 1 are not limited by these freezing systems.

### (4) Step of storing the organ or tissue in a frozen state

A storage term is determined, depending on the storage temperature or storage system. There are various storage systems and the invention is not limited by them.

### (5) Step of thawing the organ or tissue

For thawing, a vacuum microwave thawing system developed by the present inventors is employed in Claim 20. If a supercooling apparatus not using a supercooled solution is developed in future, the thawing system is presumed to gain a further advantage. There are various thawing systems, but any thawing system is usable insofar as it satisfies the requirements of Claim 1. Claim 1 is not limited by a thawing system.

### (6) Step of increasing the temperature of the organ or tissue to a positive temperature

The organ or tissue is still in a frozen state even at a thawing temperature of -2°C. In order to carry out a subsequent step of eliminating the supercooled liquid, it is necessary to change the entire temperature to a positive temperature. A temperature controlled bath capable of keeping the temperature to from 20°C to 30°C is therefore used. Since there are a variety of methods for raising every portion of the organ or tissue from -2°C to +2°C, however, Claim 1 is not limited by the method described above.

### (7) Step of judging physiological activity of cells

Physiological activity is judged using a photoenzymatic reaction. Alternatively, an electric reaction can also be used therefor. It is possible to employ various methods so that Claim 1 is not limited to the method using a photoenzymatic reaction.

### (8) Step of removing the supercooled solution

This is a step of removing the supercooled solution from the organ or tissue which has been raised to a positive temperature. It is achieved in a similar manner to that employed for blood removal in (1).

### (9) Step of administering a liquid serving for physiological activity of cells

After removal of the supercooled solution, a physiological saline or Ringer's solution containing a substance serving for physiological activity of cells is administered to the thawed organ or tissue.

### (10) Culture step

Cells are cultured by a physiological activity control means. Described specifically, cells are cultured for a predetermined time with a cell repairing agent, a cell activity aid or the like under an optimum culture environment using a cell culture medium composition at a predetermined temperature, predetermined pH value, predetermined CO₂ gas concentration, and predetermined humidity.

### [Examples]

### Example 1

Kidneys were taken out from porkers ten minutes after slaughter. The kidneys were each about 70 mm wide, about 40 mm thick and about 100 mm long on average 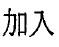 . Immediately after the extraction of the kidneys, a physiological saline was injected through the artery to remove the blood. Disappearance of a blood color from the liquid discharged from the vein gave an indication of completion of the blood removing operation. A supercooled solution containing an anticoagulant, an antioxidant, and an antibiotic was injected and the resulting kidneys were stored in a refrigerator of 4°C for 30 minutes. The polyethylene glycol concentration of the supercooled solution was set at 31% in order to prevent freezing of the kidneys up to -6°C. Sixty minutes after the extraction, the kidneys injected with the supercooled solution were each put in a sterile bag. After deaeration and sealing, the bag was frozen in a liquid freezer using as a refrigerant ethanol cooled to -30°C. It took about 30 minutes to decrease the temperature of the center portion of the kidney to -10°C or less. Forty-five minutes after the temperature of the entire portion reached -25°C, the bag was moved to a freezer of -60°C and was stored therein for 120 minutes.

The kidneys were then thawed. Five kidneys thus frozen were heated for 60 seconds under a pressure of 15 torr at microwave output of 0.5 kw. After termination of microwave heating, the pressure was reduced to 1.5 torr. Then the pressure was raised to 15 torr and microwave heating was performed for 30 seconds again. A step of terminating the microwave heating and then, carrying out pressure reduction was repeated four times to complete thawing. The temperature of each of the kidneys just after taken out from a thawing machine was -2.5°C at the center portion and -2.8°C at the surface layer portion.

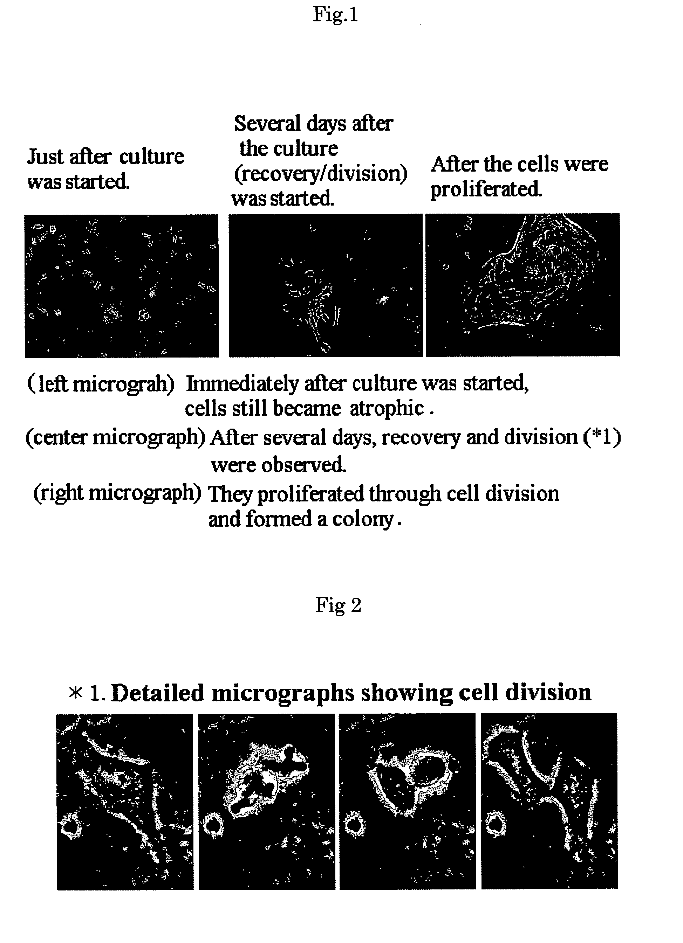

Immediately after the kidneys were taken out from the thawing machine, they were charged in a temperature-controlled bath in which a physiological saline was kept at 25°C. Twenty-five minutes later, the entire portion of the kidney became a positive temperature so that it was pulled up from the bath. A physiological saline was injected from the artery to remove the supercooled solution therefrom. In order to deliver the physiological saline to the kidney uniformly, it was used in an amount about twice as much as that used for blood removal. As a substance for serving physiological activity of cells, a physiological saline containing an antioxidant was injected. One hour later, dissociation culture was started. As illustrated in FIGS. 1 and 2, on Day 10 after starting of the culture, cell division started, followed by colonization.

### [Comparative Example]

The following tests were conducted as comparative examples of Example 1 but regeneration of cells was not observed.

### Comparative Example 1

A test was performed as in Example 1 except that the blood was not removed and the supercooled solution was not used.

### Comparative Example 2

A test was performed as in Example 1 except that the blood was removed but the supercooled solution was not used.

### Comparative Example 3

A test was performed as in Example 1 except that the blood was not removed but the supercooled solution was used.

### Comparative Example 4

A test was performed as in Example 1 except that slow freezing was performed in a freezer and slow thawing was performed in a refrigerator.

### Comparative Example 5

A test was performed as in Example 1 except that slow freezing was performed in a freezer of -40°C.

### Comparative Example 6

A test was performed as in Example 1 except that slow thawing was performed in a refrigerator of +4°C.

### Comparative Example 7

A test was performed as in Example 1 except that the concentration of the supercooled solution was 36%.

### Comparative Example 8

A test was performed as in Example 1 except that the concentration of the supercooled solution was 14%.

### Comparative Example 9

A test was performed as in Example 1 except that freezing was performed by immersing in liquid nitrogen.

### Example 2

The process employed in this example included, in addition to the steps of Example 1, adding an aloe vera gel powder →aloe vera high molecular powder as a substance serving to cell repair at the time of removing the supercooled solution after thawing. When culture was started as in Example 1, cell division started on Day 9 and colonization occurred. Cell division started about one day earlier than Example 1.

### Example 3

The process employed in this example included, in addition to the steps of Example 2, adding an aloe vera gel powder →aloe vera high molecular powder also to the blood-removed liquid and the supercooled solution before freezing. When culture was started as in Example 1, cell division started on Day 8 and colonization occurred.

The results have suggested that it tales time to start cell division because cells are damaged in freezing and thawing steps. Comparison of the results among Examples 1, 2, and 3 has shown that the glycoprotein and macromolecular polysaccharide contained in the aloe vera gel powder →aloe vera high molecular powder have an inflammation curative effect and a cell activating action, respectively.

Any cell obtained in the following examples undergoes cell division and colonization.

### Comparative Example 10

A test was performed as in Example 1 except that an air blast freezer was used and the concentration of the supercooled solution was set at 31%. Cell division started on Day 11.

### Comparative Example 11

A test was performed as in Example 1 except that a supercooling freezer using an electromagnetic field was employed and the concentration of a supercooled solution was set at 20%. Cell division started on Day 11.

### Comparative Example 12

A test was performed as in Example 3 except that an air blast freezer was employed and the concentration of a supercooled solution was set at 31%. Cell division started on Day 10.

### Comparative Example 13

A test was performed as in Example 3 except that a supercooling freezer using an electromagnetic field was employed and the concentration of a supercooled solution was 20%. Cell division started on Day 10.

## Claims

1. A thawed organ or tissue to be donated, transplanted, added, or administered to living body, which is obtained by freezing an organ or tissue taken from a human body or animal by a freezing means capable of preventing cells of the organ or the tissue from undergoing expansion of ice crystals, storing the frozen organ or tissue by a storing means capable of preventing the cells of the organ or the tissue from undergoing deterioration during storage in a frozen state, thawing the stored organ or tissue by a thawing means capable of preventing the organ or tissue from undergoing expansion of ice crystals with thawing temperatures between the center portion and the surface-layer portion of the organ or tissue kept almost the same; and causing the organ or tissue thus thawed to have physiological activity or living-body responsiveness in order to hinder damage or cell disruption of the organ or tissue.

2. A thawed cell group to be donated, transplanted, added, or administered to living body, which is obtained by subjecting cells taken from the thawed organ or tissue as claimed in Claim 1 to a physiological activity control means.

3. The thawed organ or tissue to be donated, transplanted, added, or administered to living body according to Claim 1, wherein the organ or tissue taken from a human body or animal is an organ or tissue having abundant physiological activity such as stem cells of umbilical cord, placenta or amnion which will otherwise be discarded after childbirth or skin, oral mucous membrane or parenchymal organ taken from the human body or animal.

4. The thawed cell group to be donated, transplanted, added, or administered to living body according to Claim 2, wherein the thawed cell group is taken from a thawed organ or tissue rich in stem cells of umbilical cord, placenta or amnion which will otherwise be discarded after childbirth or skin, oral mucous membrane or parenchymal organ taken from the human body or animal and subjected to the physiologically activity control means.

5. A supercooled solution to be used for a thawed organ or tissue to be donated, transplanted, added, or administered to living body, which impregnates therewith the organ or tissue as claimed in Claim 1 or 3 prior to freezing thereof, controls a freezing point of the organ or tissue to around -6°C or less and at the same time, has slight toxicity to the organ or tissue.

6. The supercooled solution to be used for a thawed organ or tissue to be donated, transplanted, added, or administered to living body according to Claim 5, which comprises a mixture obtained by mixing, at a predetermined ratio, a polyethylene glycol having a molecular weight of 200±30 g/mol and a physiological saline, a liquid obtained by adding, to the physiological saline, a substance serving for physiological activity in a predetermined amount not causing cell disruption, a Ringer's solution, or a liquid obtained by adding, to the Ringer's solution, a substance serving for physiological activity in a predetermined amount not causing cell disruption.

7. The supercooled solution to be used for a thawed organ or tissue to be donated, transplanted, added, or administered to living body according to Claim 5 or 6, wherein when the mixture is obtained by mixing a polyethylene glycol having a molecular weight of 200±30 g/mol and a physiological saline, a liquid obtained by adding, to the physiological saline, a substance serving for physiological activity in a predetermined amount not causing cell disruption, a Ringer's solution, or a liquid obtained by adding, to the Ringer's solution, a substance serving for physiological activity in a predetermined amount not causing cell disruption, the concentration of the polyethylene glycol is set at from 15% to 35% and a freezing point of the organ or tissue is around -6°C or less.

8. The supercooled solution to be used for a thawed organ or tissue to be donated, transplanted, added, or administered to living body according to any one of Claims 5 to 7, further comprising a substance serving for physiological activity of cells such as antioxidant, glycoprotein preparation, macromolecular polysaccharide preparation, or antibiotic in a predetermined amount not causing cell disruption.

9. The supercooled solution to be used for a thawed organ or tissue to be donated, transplanted, added, or administered to living body according to any one of Claims 5 to 8, further comprising, in addition to the substance serving for physiological activity of cells such as antioxidant or antibiotic, an aloe vera high molecular powder which is a natural substance containing a glycoprotein and a macromolecular polysaccharide in a predetermined amount not causing cell disruption even the amount of the other substance serving for physiological activity is added.

10. A process for producing the thawed organ or tissue to be donated, transplanted, added, or administered to living body as claimed in Claim 1 or 3, which comprises removing the blood and unwanted mixtures from an organ or tissue taken from a human body or animal, impregnating the resulting organ or tissue in an supercooled solution to freeze the organ or tissue while preventing expansion of ice crystals in the cells thereof, storing the frozen organ or tissue for a predetermined time at a temperature not causing cell disruption while preventing deterioration of the organ or tissue, completing thawing so as not to cause expansion of ice crystals in the cells of the organ or tissue also in thawing by rapidly thawing the organ or tissue to a temperature range near -0°C while approximating a thawing temperature at the center of the organ or tissue and a thawing temperature at the surface portion thereof, changing the temperature of the organ or tissue to a positive temperature, removing the supercooled solution from the organ or tissue, impregnating the resulting organ or tissue in a liquid serving for physiological activity to induce physiological activity or physiological responsiveness in the thawed organ or tissue.

11. A process for producing the thawed cell group as claimed in Claim 2 or 4 taken from the thawed organ or tissue to be donated, transplanted, added, or administered to living body as claimed in Claim 1 or 3, which comprises carrying out a physiological activity control means by repairing and/or rearing the cells for a predetermined time with a cell repairing agent and/or cell activity aid under an optimum culture environment of a cell culture liquid composition at a temperature, a pH value, a carbon dioxide gas concentration, and a humidity not causing disruption of cells after thawing, whereby physiological activity or physiological responsiveness is induced in the cell group.

12. A process for producing the thawed cell group to be donated, transplanted, added, or administered to living body according to Claim 11, wherein at the time of cell culture in Claim 11 the physiological activity or physiological responsiveness is induced in the cell group by carrying out the physiological activity control means by repairing and/or rearing the cells for a predetermined time by adding, as the cell repairing agent and/or cell activity aid, an aloe vera high molecular powder which is a natural substance containing a glycoprotein and a macromolecular polysaccharide in a predetermined amount not causing cell disruption.

13. The process for producing the thawed organ or tissue to be donated, transplanted, added, or administered to living body according to Claim 10, wherein the removal of the blood and unwanted mixtures from the organ or tissue taken from a human body or an animal is performed by pouring, from gaps between blood vessels, cells or cell supports of the organ or tissue, a physiological saline, a solution obtained by arbitrarily adding, to the physiological saline, a substance serving for physiological activity such as anticoagulant, antioxidant, or antibiotic in a predetermined amount not causing cell disruption, a Ringer's solution, or a solution obtained by arbitrarily adding, to the Ringer's solution, a substance serving for physiological activity such as anticoagulant, antioxidant, or antibiotic in a predetermined amount not causing cell disruption and thereby extruding the blood and the unwanted mixtures to remove from the gaps.

14. The process for producing a thawed organ or tissue to be donated, transplanted, added, or administered to living body according to Claim 10, wherein the removal of the blood and unwanted mixtures from the organ or tissue taken from a human body or an animal is performed by filling a sterile bag with, together with the organ or tissue, a predetermined amount of a physiological saline, a solution obtained by adding, to the physiological saline, any combination of substances serving for physiological activity such as anticoagulant, antioxidant, and antibiotic in a predetermined amount not causing cell disruption, a Ringer's solution, or a solution obtained by adding, to the Ringer's solution, any combination of substances serving for physiological activity such as anticoagulant, antioxidant, and antibiotic in a predetermined amount not causing cell disruption; loading the sterile bag in a vacuum sealing apparatus, reducing the pressures inside and outside the sterile bag, sealing the sterile bag under reduced pressure, and substituting the blood and the unwanted mixtures with the physiological solution by making use of a pressure difference between the inside and outside the sterile bag generated by returning the pressure to an atmospheric pressure.

15. The process for producing a thawed organ or tissue to be donated, transplanted, added, or administered to living body according to Claim 10, wherein the impregnation of the organ or tissue taken from a human body or animal in the supercooled solution to be used before freezing is performed by pouring the supercooled solution from gaps between the blood vessels, cells or cell supports of the organ or tissue to impregnate an entire portion of the organ or tissue in the supercooled solution.

16. The process for producing a thawed organ or tissue to be donated, transplanted, added, or administered to living body according to Claim 10, wherein the impregnation of the organ or tissue taken from a human body or animal in the supercooled solution to be used before freezing is performed by filling a sterile bag with the organ or tissue and also with the supercooled solution in a predetermined amount not causing cell disruption, loading the bag on a vacuum sealing apparatus, reducing the pressures inside and outside the sterile bag, sealing the sterile bag under reduced pressure, and then returning the pressure to atmospheric pressure to cause a difference in pressure between inside and outside the sterile bag, whereby the supercooled solution is penetrated through the organ or tissue.

17. The process for producing a thawed organ or tissue to be donated, transplanted, added, or administered to living body according to 10, wherein the freezing of the organ or tissue taken from a human body or an animal is performed by impregnating the organ or tissue with the supercooled solution having a predetermined concentration not causing cell disruption, charging the organ or tissue in a sterile bag, deaerating and sealing the sterile bag, immersing the bag in a liquid cooled to -30°C or less to rapidly freeze the organ or tissue.

18. The process for producing a thawed organ or tissue to be donated, transplanted, added, or administered to living body according to Claim 10, wherein the freezing of the organ or tissue taken from a human body or animal is performed by impregnating the organ or tissue in the supercooled solution having a concentration not causing cell disruption, charging the organ or tissue in a sterile bag, deaerating and sealing the sterile bag, and placing the bag in a freezer emitting cold air of -40°C or less to rapidly freeze an entire portion of the organ or tissue.

19. The process for producing a thawed organ or tissue to be donated, transplanted, added, or administered to living body according to Claim 10, wherein the freezing of the organ or tissue taken from a human body or animal is performed by impregnating the organ or tissue in the supercooled solution having a concentration not causing cell disruption, and placing the resulting organ or tissue in a supercooling freezer capable of creating, in a tank thereof, an electromagnetic field, thereby freezing an entire portion of the organ or tissue while reducing the concentration of the supercooled solution to from 15 to 25%.

20. The process for producing a thawed organ or tissue to be donated, transplanted, added, or administered to living body according to Claim 10, wherein the thawing of the organ or tissue stored in a frozen state is performed by charging the frozen organ or tissue in a decompression tank, repeating, a plurality of times, a step of reducing the pressure, exposing the organ or tissue to microwave radiation for a predetermined time with a predetermined output of power while reducing a pressure to enable microwave heating, terminating the microwave heating, reducing the pressure to cause sublimation at the surface layer portion of the frozen organ or tissue, decreasing a temperature difference between the inside and surface layer portion of the organ or tissue by causing sublimation at the surface layer portion of the organ or tissue, thereby reducing the temperature at the surface layer portion, returning the pressure to enable microwave heating, carrying out microwave heating again, terminating the microwave heating again, reducing the pressure to cause sublimation at the surface layer portion of the frozen organ or tissue, thereby reducing the temperature at the surface portion and approximating the temperatures inside and the surface layer portion, and completing thawing in a temperature zone near -0°C while approximating the temperatures inside and at the surface layer portion.

21. The production process of a thawed organ or tissue to be donated, transplanted, added, or administered to living body according to Claim 10, wherein the change of a temperature of the thawed organ or tissue to a positive temperature is performed by, after completing the thawing in a temperature zone near -0°C, immersing the organ or tissue in a physiological saline or a Ringer's solution maintained within a temperature range of from 20°C to 30°C to raise the temperature of the organ or tissue to a positive temperature.

22. The process for producing a thawed organ or tissue to be donated, transplanted, added, or administered to living body according to Claim 10, wherein the removal of the supercooled solution from the thawed organ or tissue is performed by pouring a physiological saline, a solution obtained by adding thereto a substance serving for physiological activity such as antioxidant in a predetermined amount not causing cell disruption, a Ringer's solution, or a solution obtained by adding thereto a substance serving for physiological activity such as antioxidant in a predetermined amount not causing cell disruption through gaps between the blood vessels, cells, or cell supports of the thawed organ or tissue and extruding the supercooled solution to remove the same.

23. The process for producing a thawed organ or tissue to be donated, transplanted, added, or administered to living body according to Claim 10, wherein the removal of the supercooled solution from the thawed organ or tissue is performed by charging, together with the organ or tissue, a physiological saline, a solution obtained by adding thereto a substance serving for physiological activity such as antioxidant in a predetermined amount not causing cell disruption, a Ringer's solution, or a predetermined amount of solution obtained by adding thereto a substance serving for physiological activity such as antioxidant in a predetermined amount not causing cell disruption in a sterile bag, placing the sterile bag in a vacuum sealing apparatus, and substituting the supercooled solution with the physiological solution by making use of a pressure difference between the inside and outside of the sterile bag generated by reducing the pressures inside and outside the sterile bag, sealing the sterile bag under reduced pressure, and returning the pressure to an atmospheric pressure.

24. The process for producing a thawed organ or tissue to be donated, transplanted, added, or administered to living body according to Claim 10, wherein the impregnation of the thawed organ or tissue after removal of the supercooled solution in the liquid serving for physiological activity is performed by pouring the liquid through gaps of the blood vessels, cells, or cell supports of the thawed organ or tissue to impregnate the organ or tissue in the liquid.

25. The process for producing a thawed organ or tissue to be donated, transplanted, added, or administered to living body according to Claim 10, wherein the impregnation of the thawed organ or tissue after removal of the supercooled solution in the liquid serving for physiological activity is performed by filling a sterile bag with a predetermined amount of the liquid and the thawed organ or tissue, placing the bag in a vacuum sealing apparatus, and impregnating the thawed organ or tissue in the liquid by making use of a pressure difference between the outside and inside of the sterile bag generated by reducing pressures inside and outside the sterile bag, sealing the sterile bag under a reduced pressure, and then returning the pressure to an atmospheric pressure.

26. The process for producing a thawed organ or tissue or cell group to be donated, transplanted, added, or administered to living body according to Claim 10 or Claim 11, wherein judgment of the physiological activity of the thawed organ or tissue, or the cell group is performed based on an electrical response from the thawed organ or tissue or the cell group or a partial extract therefrom, a change in light signal detected via a probe from the thawed organ or tissue or the cell group, or cell division, cell proliferation or colonization induced by culture.

27. An apparatus for producing the thawed organ or tissue as claimed in Claim 1 or Claim 3, which carries therein the organ or tissue taken from a human body or an animal, deprived of the blood or unwanted mixtures, impregnated with the supercooled solution, and then sealed in a deaerated sterile bag; comprises: (1) a liquid freezer, an air blast freezer, or a supercooling freezer using an electromagnetic field, which enable rapid freezing; (2) a freezer which stores the frozen organ or tissue at a temperature not greater than -60°C for a predetermined term; (3) a rapid thawing apparatus capable of approximating thawing temperatures at the center portion and surface layer portion of the frozen organ or tissue and bringing a thawing completion temperature close to -0°C, (4) a converter of the temperature of the thawed organ or tissue to a positive temperature, and (5) an apparatus for judging the physiological activity of cells; and induces the physiological activity or biological responsiveness of the thawed organ or tissue.
